# EUROPÄISCHE PATENTANMELDUNG

(11) **EP 4 851 742 A1**
(43) Veröffentlichungstag der Anmeldung: **09.12.2026**
(21) Anmeldenummer: 26176527.5
(22) Anmeldetag: 05.05.2026
(51) Int. Cl.: G05D 1/221, B60W 30/00

(54) **VERFAHREN UND SYSTEM ZUM TELEOPERIERTEN FAHREN VON FAHRZEUGEN**

(30) Priorität: 06.06.2025 DE 102025122412
(71) Anmelder: Stellantis Auto SAS, 78300 Poissy (FR); FCA US LLC, Auburn Hills, MI 48326-2766 (US)
(72) Erfinder: BONARENS, Frank, 65428 RÜSSELSHEIM AM MAIN (DE); BICKEL, Markus, 65428 RÜSSELSHEIM AM MAIN (DE)
(74) Vertreter: ESIP

(57) **Zusammenfassung**

Die vorliegende Offenbarung betrifft ein Verfahren zum teleoperierten Fahren von Fahrzeugen. Ein teleoperiertes Fahrzeug (1) wird über eine mobile Datenverbindung (3) mit einem Leitstand (2) eines Telefahrers (4) verbunden, wobei über die mobile Datenverbindung (3) ein Bilddatenstrom von einer Umfeldkamera (11) des teleoperierten Fahrzeugs (1) an den Leitstand (2) sowie Eingabedaten von einer Bedieneinrichtung (21, 22) des Leitstands (2) an das teleoperierte Fahrzeug (1) gesendet werden. Auf einem Bildschirm (20) des Leitstands (2) wird ein Bild einer aktuellen Fahrzeugumgebung basierend auf empfangenen Bilddatensätzen wiedergegeben. Basierend auf empfangenen Eingabedaten eines Telefahrers (4) erfolgt eine Steuerung des teleoperierten Fahrzeugs (1) in Längs- und/oder Querrichtung. Es werden fortwährend Bilddatensätze der Umfeldkamera (11) mittels einer Objekterkennungseinrichtung (26) analysiert, wobei statische Objekte in der aktuellen Fahrzeugumgebung basierend auf den Bilddatensätzen mittels der Objekterkennungseinrichtung (26) erkannt und lokalisiert werden, und wobei ein kritisches Szenario festgestellt wird, sobald von dem teleoperierten Fahrzeug (1) beim Passieren der erkannten statischen Objekte ein seitlicher Mindestabstand zu wenigstens einem der statischen Objekte unterschritten wurde, wobei zu dem kritischen Szenario Daten über eine Ortsposition und Objektdaten der statischen Objekte in einer Datenbank (25) gespeichert werden. Die vorliegende Offenbarung betrifft ferner ein entsprechendes System zum teleoperierten Fahren von Fahrzeugen.

## Beschreibung

### Technisches Gebiet

Die Erfindung betrifft ein Verfahren und ein System zum teleoperierten Fahren von Fahrzeugen.

Beim teleoperierten Fahren von Fahrzeugen wird ein teleoperiertes Fahrzeug von einem Leitstand aus über eine funkbasierte Kommunikationsschnittstelle ferngesteuert. Der Leitstand für einen Telefahrer (engl. tele driver) umfasst wenigstens ein Bildschirm, auf dem ein Bild einer aktuellen Fahrzeugumgebung des teleoperierten Fahrzeugs wiedergegeben wird. Erfahrungsgemäß gestaltet sich die Einschätzung des Abstandes in Fahrzeugquerrichtung für einen Telefahrer besonders schwierig. Dies hängt unter anderem mit der Perspektive einer Umfeldkamera des teleoperierten Fahrzeuges zusammen, die sich von der Perspektive eines Fahrerplatzes im teleoperierten Fahrzeug unterscheiden kann. Ferner wird die Einschätzung durch die unvermeidbare Latenz bei einer Livebildübertragung zwischen Fahrzeug und Leitstand erschwert. Des Weiteren ist die Dynamik in Fahrzeugquerrichtung im Vergleich zur Längsrichtung groß.

### Kurzbeschreibung der Erfindung

Vor diesem Hintergrund liegt der Erfindung die Aufgabe zugrunde, einen Telefahrer bei der Querführung eines teleoperierten Fahrzeugs zu unterstützen.

Vorgeschlagen wird dementsprechend ein Verfahren gemäß dem Hauptanspruch sowie ein System gemäß dem Nebenanspruch. Weiterführende Ausgestaltungen sind Gegenstand der jeweils abhängigen Ansprüche.

Gemäß einem ersten Aspekt der Erfindung wird die Aufgabe gelöst durch ein Verfahren zum teleoperierten Fahren von Fahrzeugen. Ein teleoperiertes Fahrzeug wird über eine mobile Datenverbindung mit einem Leitstand eines Telefahrers verbunden, wobei über die mobile Datenverbindung ein Bilddatenstrom von einer Umfeldkamera des teleoperierten Fahrzeugs an den Leitstand sowie Eingabedaten von einer Bedieneinrichtung des Leitstands an das teleoperierte Fahrzeug gesendet werden. Auf einem Bildschirm des Leitstands wird ein Bild einer aktuellen Fahrzeugumgebung basierend auf empfangenen Bilddatensätzen wiedergegeben. Basierend auf empfangenen Eingabedaten eines Telefahrers erfolgt eine Steuerung des teleoperierten Fahrzeugs in Längs- und/oder Querrichtung. Die Bilddatensätze der Umfeldkamera werden fortwährend mittels einer Objekterkennungseinrichtung analysiert, wobei statische Objekte in der aktuellen Fahrzeugumgebung basierend auf den Bilddatensätzen mittels der Objekterkennungseinrichtung erkannt und lokalisiert werden.

Ein kritisches Szenario wird dann festgestellt, sobald von dem teleoperierten Fahrzeug beim Passieren der erkannten statischen Objekte ein seitlicher Mindestabstand zu wenigstens einem der statischen Objekte unterschritten wurde. Zu dem kritischen Szenario werden Daten über eine Ortsposition und Objektdaten der statischen Objekte in einer Datenbank gespeichert.

Eine Idee hinter dem vorgeschlagenen Verfahren ist, während einer Fahrt eine Situation mit einer kritischen Annäherung an ein statisches Objekt zu identifizieren und entsprechende Daten über ein kritisches Szenario in einer Datenbank abzulegen. Durch die gespeicherten Ortspositionsdaten kann das kritische Szenario einem Ort im Straßennetz eines Einsatzgebietes für das teleoperierte Fahren zugeordnet werden. Die kritische Szene kann durch die Relativpositionen der statischen Objekte zum teleoperierten Fahrzeug beschrieben werden. Die Informationen über kritische Szenarien bzw. über kritische Ortsumgebungen können für zukünftige teleoperierte Fahrten von Fahrzeugen abgerufen und berücksichtigt werden.

Gemäß einer Weiterbildung des Verfahrens können solche statischen Objekte als kritische Objekte identifiziert werden, zu denen der Mindestabstand beim Durchfahren eines kritischen Szenarios zumindest zeitweise unterschritten wurde.

In der Datenbank kann somit zwischen zwei Gruppen von statischen Objekten eines kritischen Szenarios unterschieden werden. Den kritischen Objekten ist das teleoperierte Fahrzeug beim Durchfahren des Szenarios zu nahegekommen, während die Mindestabstände zu nicht kritischen Objekten eingehalten wurden. Kritische und nicht-kritische Objekte können in der Datenbank mittels Zusatzattributen gekennzeichnet und zu der kritischen Szene in der Datenbank abgelegt werden.

Gemäß einer Weiterbildung des Verfahrens kann vom dem Leitstand ein Warnsignal ausgegeben werden, sobald der Mindestabstand zwischen dem teleoperierten Fahrzeug und wenigstens einem statischen Objekt unterschritten wird.

Ein Telefahrer erhält somit eine sofortige Rückmeldung über ein nicht-optimales Fahrmanöver beim Passieren statischer Objekte seitlich zum Fahrzeug.

Gemäß einer Weiterbildung des Verfahrens kann bei einer Annäherung des teleoperierten Fahrzeugs an eine in der Datenbank verzeichnete Ortsposition eines kritischen Szenarios die gespeicherten Objektdaten mit statischen Objekten verglichen werden, die in einer aktuellen Fahrzeugumgebung erkannt wurden. Basierend auf dem Vergleich können erkannte statische Objekte als kritische Objekte wiedererkannt werden, wobei die wiedererkannten kritischen Objekte bei einer Bildwidergabe der aktuellen Fahrzeugumgebung auf dem Bildschirm graphisch hervorgehoben werden.

Bei einem Wiedererkennen eines kritischen Szenarios, das zusammen mit einer Ortsposition in der Datenbank vorhanden ist, werden bevorzugt die statischen Objekte zielgerichtet augmentiert, denen ein Telefahrer bei einer Fahrt bereits zu nahegekommen war. Ein Telefahrer kann vor und während einer erneuten Durchfahrt des Szenarios sensibilisiert werden. Die grafische Hervorhebung kann beispielsweise mittels Begrenzungsrahmen erfolgen, die einem Livebild über eine aktuellen Fahrzeugumgebung auf dem Bildschirm des Teleoperators überlagert angezeigt werden.

Gemäß einer Weiterbildung des Verfahrens kann vom Leitstand ein Signal ausgegeben werden, wenn bei einem erneuten Durchfahren des kritischen Szenarios der Mindestabstand zu statischen Objekten eingehalten wurde.

Durch die Überprüfung des Mindestabstands bei der erneuten Durchfahrt kann dem Telefahrer eine positive Rückmeldung gegeben werden, um einen Trainingseffekt beim Fernsteuern des teleoperierten Fahrzeugs zu erzielen.

Gemäß einer Weiterbildung des Verfahrens kann in der Datenbank zu jedem gespeicherten kritischen Szenario ein Zähler vorgesehen werden, der inkrementiert wird, wenn bei einem erneuten Durchfahren des kritischen Szenarios der Mindestabstand zu wenigstens einem der statischen Objekte unterschritten wurde.

Ferner kann der Zähler ergänzend dekrementiert werden, wenn bei einem erneuten Durchfahren des kritischen Szenarios der Mindestabstand zu den statischen Objekten eingehalten wurde.

Das erfindungsgemäße Verfahren kann somit einen Beitrag zur Unterstützung und zum Training von Telefahrern hinsichtlich der Querführungsaufgabe beim teleoperierten Fahren von Fahrzeugen leisten. Der Zähler gemäß den vorstehenden Aspekten kann optional telefahrerspezifisch ausgebildet sein. Somit können nur solche statischen Objekte in der Bildwiedergabe graphisch hervorgehoben werden, die sich für einen spezifischen Telefahrer zuvor als kritisch erwiesen haben.

Ein gezieltes ggf. telefahrerspezifisches Augmentieren kritischer Objekte, reduziert gegenüber eines Hervorhebens aller in einem aktuellen Fahrzeugumfeld erkannten Objekte eine geringere Ablenkung.

Ferner können kritische Orte im Straßennetz bei einer Routenplanung für teleoperierte Fahrten vermieden werden, wenn ein Zähler einen Schwellwert überschreitet.

Nach einem weiteren Aspekt der Erfindung wird die Aufgabe gelöst durch ein System zum teleoperierten Fahren von Fahrzeugen, wobei ein teleoperiertes Fahrzeug über eine mobile Datenverbindung mit einem Leitstand eines Telefahrers verbunden ist. Die mobile Datenverbindung ist ausgebildet, einen Bilddatenstrom von einer Umfeldkamera des teleoperierten Fahrzeugs an den Leitstand sowie Eingabedaten von einer Bedieneinrichtung des Leitstands an das teleoperierte Fahrzeug zu senden. Der Leitstand umfasst einen Bildschirm und ist ausgebildet, ein Bild einer aktuellen Fahrzeugumgebung basierend auf empfangenen Bilddatensätzen wiederzugeben. Dem Leitstand ist ferner eine Objekterkennungseinrichtung zugeordnet, die ausgebildet ist, fortwährend Bilddatensätze der Umfeldkamera zu analysieren und in den Bilddatensätzen statische Objekte zu erkennen und zu lokalisieren. Der Leitstand ist ferner ausgebildet, basierend auf Objektdaten über die statischen Objekte einen Mindestabstand zwischen dem teleoperierten Fahrzeug und den statischen Objekten zu überwachen und beim Feststellen eines Unterschreitens des Mindestabstands ein kritisches Szenario zu erkennen und zu dem kritischen Szenario Daten über eine Ortsposition und Objektdaten der statischen Objekte in einer Datenbank abzulegen.

### Kurze Beschreibung der Zeichnungsfiguren

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen. Dabei zeigen:
- Figur 1: zeigt ein System zum teleoperierten Fahren von Fahrzeugen,
- Figur 2: zeigt ein Bild einer Fahrzeugumgebung;
- Figur 3: zeigt ein Bildschirm mit einer Bildwiedergabe einer Fahrzeugumgebung und Hervorhebungen kritischer Objekte,
- Figur 4: zeigt ein Verfahrensablauf zum teleoperierten Fahren von Fahrzeugen.

### Beschreibung der Ausführungsarten

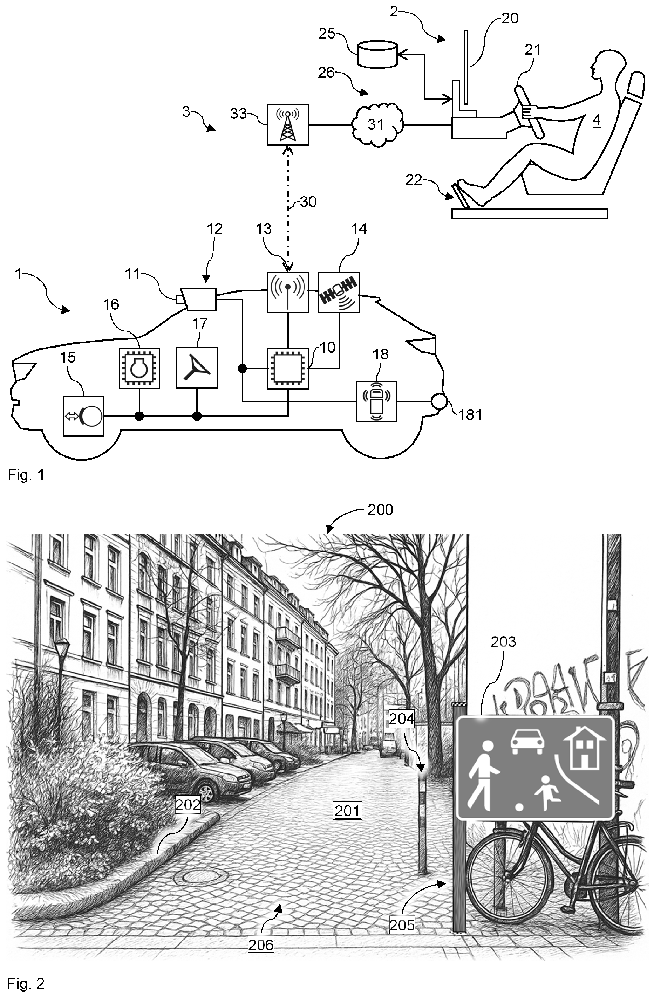

Die Figur 1 zeigt ein System zum teleoperierten Fahren von Fahrzeugen, das ein teleoperiertes Fahrzeug 1 und einen Leitstand 2 umfasst. Fahrzeug 1 und Leitstand 2 stehen über eine mobile Datenverbindung 3 miteinander in Verbindung. Das Fahrzeug 1 besitz dazu ein Mobilfunkmodem 13, das ausgebildet ist, eine Mobilfunkverbindung 30 zu einem Mobilfunknetz 33 aufzubauen. Der Leitstand 2 ist beispielhaft über ein kabelbasiertes Netzwerk 31 mit dem Mobilfunknetz 33 verbunden.

Der Leitstand 2, der sich in Räumen eines Teleoperationsanbieters befindet, stellt eine Mensch-Maschine-Schnittstelle bereit, die zum Fernsteuern des teleoperierten Fahrzeugs 1 durch einen menschlichen Telefahrer 4 ausgebildet ist. Der Leitstand 2 umfasst wenigstens einen Bildschirm 20 sowie ein Lenkrad 21, eine Pedalerie 22 sowie ggf. eine weitere Anzahl von Bedieneinrichtungen, die zum Fahren eines Kraftfahrzeuges erforderlich sind.

Über das Mobilfunkmodem 13 wird fortwährend ein Bilddatenstrom einer Umfeldkamera 11 des teleoperierten Fahrzeugs 1 an den Leitstand 2 gesendet, sodass basierend auf empfangenen Bilddaten ein Live-Bild einer aktuellen Fahrzeugumgebung des teleoperierten Fahrzeugs 1 auf dem Bildschirm 20 wiedergegeben werden kann. Der Telefahrer 4 soll, mit Hilfe des auf dem Bildschirm wiedergegebenen Live-Bildes der Fahrzeugumgebung, das Fahrzeug von der Ferne aus führen, in dem er entsprechende Eingaben über das Lenkrad 21 und die Pedalerie 22 vornimmt. Entsprechende Eingabedaten, die der Telefahrer 4 über die Bedieneinrichtungen 21 und 22 am Leitstand 2 vorgenommen hat, werden in Echtzeit über die mobile Datenverbindung 3 an das teleoperierte Fahrzeug 1 übermittelt.

Die über das Mobilfunkmodem 13 empfangenen Eingabedaten des Telefahrers 4 werden mittels einer elektronischen Steuereinheit 10 verarbeitet, die ausgebildet ist, ein Bremssystem 15, ein Antriebssystem 16 und/oder ein Lenksystem 17 zur Längs- und Querführung des teleoperierten Fahrzeugs 2 entsprechend anzusteuern.

Ein Problem beim teleoperierten Fahren von Fahrzeugen besteht erfahrungsgemäß darin, dass es für den Telefahrer 4 allgemein schwierig ist, Abstände zwischen dem teleoperierten Fahrzeug 1 und seitlichen Objekten im Fahrzeugumfeld korrekt einzuschätzen. Dies hängt einerseits mit der Perspektive der Umfeldkamera 11 zusammen, die als ADAS-Frontkamera ausgebildet sein kann und am oberen Rand einer Windschutzscheibe und mittig zur Fahrzeugquerrichtung des teleoperierten Fahrzeugs 1 angeordnet ist.

Ferner unterliegt die Liveübertragung des kamerabasierten Bildes der Fahrzeugumgebung einer technisch bedingten Zeitverzögerung, der sogenannten Latenz, die insbesondere durch die Mobilfunkverbindung 30 hervorgerufen wird. Des Weitern sind die Dynamiken in Fahrzeugquerrichtung im Vergleich zur Fahrzeuglängsdynamik groß.

Somit stellt das Einhalten eines ausreichenden seitlichen Sicherheitsabstands eine entscheidende Herausforderung beim teleoperierten Fahren dar. Dies gilt insbesondre in Bezug auf ortsfeste Hindernisse, die eine Engstelle im Straßenverlauf einer bestimmten örtlichen Umgebung hervorrufen können.

Die Figur 2 zeigt ein Bild einer Fahrzeugumgebung 200, das von der Umfeldkamera 11 des teleoperierten Fahrzeugs 1 zu einem Zeitpunkt aufgenommen und auf dem Bildschirm 20 des Leitstands 2 angezeigt wird. Zu erkennen ist eine Straße mit einer Fahrbahn 201, die in einem verkehrsberuhigten Bereich verläuft. Am Straßenanfang ist die Fahrbahn 201 linksseitig durch einen Bordstein 202 begrenzt, der einen Grünbereich einfasst. Rechtsseitig grenzt eine Stellfläche 205 z.B. für Fahrräder an die Fahrbahn 201 an, die durch ein Verkehrsschild 203 und einen Sperrpfosten 204 von der Fahrbahn 201 abgegrenzt ist. Das Verkehrsschild kennzeichnet den Beginn des verkehrsberuhigten Bereichs. Am Straßenanfang weist die Fahrbahn 201 somit eine Engstelle 206 auf, die sich zwischen dem Bordstein 202 und der Stellfläche 205 ausbildet. Das Verkehrsschild 203 und der Sperrpfosten 204 stellen zwei ortsfeste bzw. statische Objekte dar, zu denen bei einem Durchfahren der Engstelle 206 ein ausreichender Sicherheitsabstand einzuhalten ist, um eine Kollision bei der teleoperierten Fahrzeugführung sicher auszuschließen.

Eine Aufgabe hinter der vorliegenden Erfindung besteht darin, den Telefahrer 4 bei der Querführung des teleoperierten Fahrzeugs 1 beim Durchfahren von Engstellen im Straßenverkehr zu unterstützen, um insbesondre einen ausreichenden seitlichen Sicherheitsabstand zu ortsfesten, d.h. statischen Objekten im Fahrzeugumfeld zu gewährleisten.

Erfindungsgemäß ist mitunter vorgesehen, Bilddatensätze aus dem Bilddatenstrom der Umfeldkamera 11 mittels einer Objekterkennungseinrichtung fortwährend zu analysieren, während der Telefahrer 4 das teleoperierte Fahrzeug 1 fährt.

Eine kamerabildbasierte Erkennung von Objekten in einem Bilddatensatz und/oder einem Bilddatenstrom kann mittels Objekterkennungsmodellen basierend auf tiefen neuronalen Netzen (engl. deep neural networks, DNN) erfolgen. DNN-basierte Objekterkennungsmodelle zur semantischen Instanzsegmentierung von Bilddatensätzen erlauben eine Trennung von Objektklassen sowie von unterschiedlichen Instanzen einer jeweiligen Objektklasse. Somit können insbesondre zwischen statischen und dynamischen Objekten in einem Bild und/oder einer Bildfolge unterschieden werden. Objekterkennungsmodelle können ferner über zusätzliche Erkennungsköpfe (engl. detection heads) verfügen, die auf eine Tiefenschätzung trainiert sind. Somit können auch Abstände zwischen dem teleoperierten Fahrzeug 1 und den erkannten Objekten im Fahrzeugumfeld kamerabilddatenbasiert ermittelt werden. Ein DNN-basiertes Objekterkennungsmodell kann als Softwaremodul in einer Objekterkennungseinrichtung eingebettet sein, die eine relevante Hardware zum Ausführen eines entsprechenden Programmcodes bereitstellt.

Die Objekterkennungseinrichtung 26 ist vorzugsweise dem Leitstand 2 zugeordnet, um von einer konkreten Ausstattung eines fernzusteuernden Fahrzeugs unabhängig zu sein. Grundsätzlich kann eine Objekterkennungseinrichtung 12 auch im teleoperierten Fahrzeug 1 angeordnet sein, die ggf. eine Umfeldmodellierung, z.B. mit einer Fusion anderer nicht kamerabasierter Umfeldsensoren umfassen kann.

Zur kontinuierlichen Überwachung von seitlichen Abständen können Daten von einer Abstandsüberwachungseinrichtung 18 des teleoperierten Fahrzeugs 1 herangezogen werden, die parallel zum Bilddatenstrom über die mobile Datenverbindung 3 an den Leitstand 2 gesendet werden. Die Abstandsüberwachungseinrichtung 18 kann mittels Ultraschall- und/oder Radarsensoren 181 ausgebildet sein, Abstände zwischen Fahrzeug und Hindernissen im Nahbereich zu erfassen.

Mittels der Objekterkennungseinrichtung 26, bzw. eines Anwendens eines DNN-basierten Objekterkennungsmodell, werden der Bordstein 202, das Verkehrsschild 203 und der Sperrpfosten 204 als statische Objekte erkannt und lokalisiert. Beim Durchfahren der Engstelle 206 wird fortwährend ein aktueller Abstand zwischen dem teleoperierten Fahrzeug 1 und den statischen Objekten 202, 203 und 204 ermittelt und mit einem Grenzwert für einen seitlichen Mindestabstand verglichen.

Ein statisches Objekt wird dann als ein kritisches Objekt erkannt, wenn im Vorbeifahren der Mindestabstand zwischen dem teleoperierten Fahrzeug 1 und dem betreffenden Objekt zumindest zeitweise unterschritten wird.

Ein Unterschreiten des Mindestabstands kann dem Telefahrer 4 optisch und/oder akustisch signalisiert werden.

Beim Durchfahren der in der Figur 2 dargestellten Engstelle 206 werden beispielhaft das Verkehrsschild 203 und der Sperrpfosten 204 als kritische Objekte erkannt, wenn das teleoperierte Fahrzeug 1 den rechten seitlichen Mindestabstand nicht einhält.

Eine entsprechende Durchfahrtsszene wird zusammen mit Zusatzattributen in einer Datenbank 25 abgelegt. Ein Datensatz über eine kritische Szene enthält zumindest Informationen über eine Objektklasse und eine Ortsposition aller als kritisch erkannten Objekte. Eine aktuelle Ortsposition des teleoperierten Fahrzeugs kann mittels eines GNSS-Empfänger 14 des Fahrzeugs ermittelt werden, aus denen die Ortsposition der erkannten Objekte, wie das Verkehrsschild 203 und der Sperrpfosten 204 des vorliegenden Beispiels, relativ zur aktuellen Fahrzeugposition abgeleitet werden können. In der Datenbank 25 werden kritische Szenarien und Orte im Einsatzgebiet des teleoperierten Fahrens zusammengetragen, bei denen der vorgegebene seitlichen Mindestabstand zu statischen Objekten nicht eingehalten wurde. In den Zusatzattributen kann ferner ein Zähler enthalten sein, der angibt, wie häufig der Mindestabstand im Zusammenhang mit einem konkreten Szenario bzw. Ort nicht eingehalten worden ist. Die Daten können kollektive und/oder für einen Telefahrer individuelle Zähler enthalten.

Wenn sich das teleoperierte Fahrzeug 1 einer Ortsposition nähert, die in der Datenbank 25 gespeichert ist, können Objekte, die mittels der Objekterkennungseinrichtung 26 in aktuellen Bilddatensätzen der Umfeldkamera 11 klassifiziert und lokalisiert wurden, mit korrespondierenden Daten eines zugehörigen Datensatzes verglichen werden, sodass Objekte als kritische Objekte wiedererkannt werden.

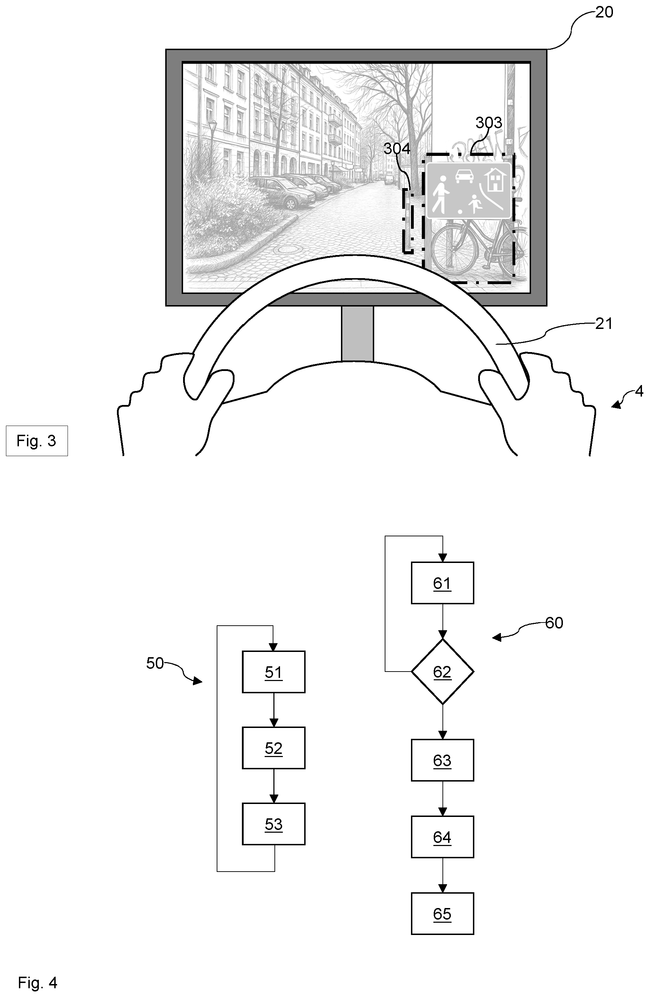

Wie durch die Figur 3 veranschaulicht wird, werden auf dem Bildschirm 20 solche Bildbereiche einer wiedergegebenen Fahrzeugumgebung mit Begrenzungsrahmen 303 und 304 hervorgehoben, die eine Abbildung des Verkehrsschilds 203 und des Sperrpfostens 204 markieren. Dem Telefahrer 4 werden durch diese Begrenzungsrahmen zwei potenziell kritische Objekte visualisiert, bevor das teleoperierte Fahrzeug 1 die Engstelle 206 zum erneuten Durchfahren erreicht.

Ein erfolgreich absolviertes erneutes Durchfahrtsszenario kann dem Telefahrer im Nachgang durch ein positives optisches und/oder akustisches Feedback signalisiert werden.

Eine Idee hinter dem System und Verfahren zum teleoperierten Fahren ist, die relevanten Objekte eines kritischen Szenarios wiederzuerkennen und diese zielgerichtet zu augmentieren. Durch das Hervorheben genau der Objekte, denen der Telefahrer oder ein anderer Telefahrer bei einer vorhergehenden teleoperierten Fahrt zu nahegekommen war, kann der Telefahrer auf das Einhalten von Sicherheitsabständen trainiert werden. Durch das Feedback wird also ein Einschätzungsvermögen für einen seitlichen Sicherheitsabstand trainiert.

Der Zähler für das Unterschreiten des Mindestabstands im Zusammenhang mit einem konkreten Szenario kann erfolgsabhängig inkrementiert oder dekrementiert werden.

In der Figur 4 ist ein Ablauf eines Verfahrens zum teleoperierten Fahren von Fahrzeugen dargestellt. Das Verfahren umfasst wenigstens zwei parallel zueinander ablaufende Prozesse. Ein erster Prozess 50 umfasst ein Erkennen und Speichern von neuen kritischen Szenarien, die beim teleoperierten Fahren innerhalb eines Einsatzgebietes auftreten. Ein zweiter Prozess 60 umfasst ein Wiedererkennen eines gespeicherten kritischen Szenarios und eine Prozedur zur Unterstützung des Telefahrer 4 in einem potenziell kritischen Szenario.

Der erste Prozess 50 umfasst einen ersten Schritt 51, mit dem über die mobile Datenverbindung 3 kamerabasierte Bilddatensätze über eine aktuelle Fahrzeugumgebung und ggf. weitere Fahrzeugdaten vom teleoperierten Fahrzeug 1 an den Leitstand 2 übermittelt werden. In einem nachfolgenden zweiten Schritt 52 erfolgt eine Erkennung statischer Objekte in aktuellen Bilddatensätzen. In einem dritten Schritt 53 werden Abstandswerte zwischen dem teleoperierten Fahrzeug 1 und den statischen Objekten ermittelt, die in Fahrzeugquerrichtung beabstandet sind. Sofern zumindest eine der ermittelten Abstandswerte einen vorgegebenen Mindestabstand unterschreitet, wird ein Datensatz für ein kritisches Szenario mit Daten über die erkannten Objekte und ihren Ortpositionen erzeugt und mit Zusatzattributen in der Datenbank 25 abgelegt.

Der zweite Prozess 60 umfasst einen ersten Schritt 61, in dem über die mobile Datenverbindung 3 kamerabasierte Bilddatensätze über eine aktuelle Fahrzeugumgebung sowie aktuelle GNSS-Positionsdaten des teleoperierten Fahrzeugs 1 von dem Leitstand 2 empfangen werden. In einem zweiten Schritt 62 wird anhand der aktuellen GNSS-Positionsdaten überprüft, ob sich das teleoperierte Fahrzeug 1 einer Ortsposition nähert, zu der ein Datensatz für ein kritisches Szenario in der Datenbank 25 gespeichert ist. Wurde eine Annäherung an eine Ortsposition eines kritischen Szenarios festgestellt, erfolgt in einem dritten Schritt 63 eine Erkennung, Lokalisierung und Klassifizierung von statischen Objekten in den empfangenen Bilddatensätzen. In einem vierten Schritt 64 werden Daten über die in den Bilddatensätzen erkannten Objekte mit den in der Datenbank 25 gespeicherten Daten verglichen. In einem fünften Schritt 65 wird ein Bild der aktuellen Fahrzeugumgebung basierend auf den empfangenen Bilddatensätzen auf dem Bildschirm 20 wiedergegeben. Objekte, die basierend auf dem Vergleich als kritische Objekte wiedererkannt wurden, werden mittels Begrenzungsrahmen 303 und 304 in der Bildschirmwiedergabe hervorgehoben.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

### Liste der Bezugszeichen

- 1: Fahrzeug
- 10: ECU
- 11: Umfeldkamera
- 12: Objekterkennungseinrichtung
- 13: Mobilfunkmodem
- 14: GNNS-Receiver
- 15: Bremssystem
- 16: Antriebssteuerung
- 17: Lenksystem
- 18: Abstandsüberwachungseinrichtung
- 181: Sensor
- 2: Leitstand
- 20: Bildschirm
- 21: Lenkrad
- 22: Pedalerie
- 25: Datenbank
- 26: Objekterkennungseinrichtung
- 3: mobile Datenverbindung
- 30: Funkübertragungskanal
- 31: Netzwerk
- 32: Basisstation
- 4: Telefahrer
- 200: Fahrzeugumgebung
- 201: Fahrbahn
- 202: Bordstein
- 203: Verkehrsschild
- 204: Sperrpfosten
- 205: Stellfläche
- 206: Engstelle
- 50: Verfahren
- 51-53: Schritte
- 60: Verfahren
- 61-63: Schritte

## Patentansprüche

1. Verfahren zum teleoperierten Fahren von Fahrzeugen, wobei ein teleoperiertes Fahrzeug (1) über eine mobile Datenverbindung (3) mit einem Leitstand (2) eines Telefahrers (4) verbunden wird, wobei über die mobile Datenverbindung (3) ein Bilddatenstrom von einer Umfeldkamera (11) des teleoperierten Fahrzeugs (1) an den Leitstand (2) sowie Eingabedaten von einer Bedieneinrichtung (21, 22) des Leitstands (2) an das teleoperierte Fahrzeug (1) gesendet werden, wobei auf einem Bildschirm (20) des Leitstands (2) ein Bild einer aktuellen Fahrzeugumgebung (200) basierend auf empfangenen Bilddatensätzen wiedergegeben wird, und wobei basierend auf empfangenen Eingabedaten eines Telefahrers (4) eine Steuerung des teleoperierten Fahrzeugs (1) in Längs- und/oder Querrichtung erfolgt, wobei fortwährend Bilddatensätze der Umfeldkamera (11) mittels einer Objekterkennungseinrichtung (26) analysiert werden, wobei statische Objekte (203, 204) in der aktuellen Fahrzeugumgebung basierend auf den Bilddatensätzen mittels der Objekterkennungseinrichtung (26) erkannt und lokalisiert werden, und wobei ein kritisches Szenario festgestellt wird, sobald von dem teleoperierten Fahrzeug (1) beim Passieren der erkannten statischen Objekte (203, 204) ein seitlicher Mindestabstand zu wenigstens einem der statischen Objekte (203, 204) unterschritten wurde, wobei zu dem kritischen Szenario Daten über eine Ortsposition und Objektdaten der statischen Objekte (203, 204) in einer Datenbank (25) gespeichert werden.

2. Verfahren nach vorstehendem Anspruch 1, wobei solche statischen Objekte als kritische Objekte identifiziert werden, zu denen der Mindestabstand beim Durchfahren eines kritischen Szenarios zumindest zeitweise unterschritten wurde.

3. Verfahren nach einem der vorstehenden Ansprüche 1 oder 2, wobei vom Leitstand (2) ein Warnsignal ausgegeben wird, sobald der Mindestabstand zwischen dem teleoperierten Fahrzeug (1) und wenigstens einem statischen Objekt unterschritten wird.

4. Verfahren nach Anspruch 2, wobei bei einer Annäherung des teleoperierten Fahrzeugs (1) an eine in der Datenbank (25) verzeichnete Ortsposition eines kritischen Szenarios die gespeicherten Objektdaten mit statischen Objekten verglichen werden, die in einer aktuellen Fahrzeugumgebung erkannt wurden, sodass basierend auf dem Vergleich erkannte statische Objekte als kritische Objekte wiedererkannt werden, und wobei die wiedererkannten kritischen Objekte bei einer Bildwidergabe der aktuellen Fahrzeugumgebung (200) auf dem Bildschirm (20) grafisch hervorgehoben werden.

5. Verfahren nach Anspruch 4, wobei vom Leitstand (2) ein Signal ausgegeben wird, wenn beim erneuten Durchfahren des kritischen Szenarios der Mindestabstand zu den statischen Objekten eingehalten wurde.

6. Verfahren nach einem der vorstehenden Ansprüche 4 bis 5, wobei in der Datenbank (25) zu jedem gespeicherten kritischen Szenario ein Zähler vorgesehen wird, der inkrementiert wird, wenn bei einem erneuten Durchfahren des kritischen Szenarios der Mindestabstand zu wenigstens einem der statischen Objekte (203, 204) unterschritten wurde.

7. Verfahren nach vorstehendem Anspruch 6, wobei der Zähler dekrementiert wird, wenn bei einem erneuten Durchfahren des kritischen Szenarios der Mindestabstand zu den statischen Objekten (203, 204) eingehalten wurde.

8. System zum teleoperierten Fahren von Fahrzeugen, wobei ein teleoperiertes Fahrzeug (1) über eine mobile Datenverbindung (3) mit einem Leitstand (2) eines Telefahrers (4) verbunden ist, wobei die mobile Datenverbindung (3) ausgebildet ist, einen Bilddatenstrom von einer Umfeldkamera (11) des teleoperierten Fahrzeugs (1) an den Leitstand (2) sowie Eingabedaten von einer Bedieneinrichtung (21, 22) des Leitstands (2) an das teleoperierte Fahrzeug (1) zu senden, wobei der Leitstand (2) einen Bildschirm (20) umfasst und ausgebildet ist, ein Bild einer aktuellen Fahrzeugumgebung (200) basierend auf empfangenen Bilddatensätzen wiederzugeben, und wobei dem Leitstand (2) ferner eine Objekterkennungseinrichtung (26) zugeordnet ist, die ausgebildet ist, fortwährend Bilddatensätze der Umfeldkamera (11) zu analysieren und in den Bilddatensätzen statische Objekte zu erkennen und zu lokalisieren, und wobei der Leitstand (2) ausgebildet ist, basierend auf Objektdaten über die statischen Objekte (203, 204) einen Mindestabstand zwischen dem teleoperierten Fahrzeug (1) und den statischen Objekten (203, 204) zu überwachen und beim Feststellen eines Unterschreitens des Mindestabstands ein kritisches Szenario zu erkennen und zu dem kritischen Szenario Daten über eine Ortsposition und Objektdaten der statischen Objekte (203, 204) in einer Datenbank (25) abzulegen.
